# EUROPEAN PATENT APPLICATION

(11) **EP 4 851 975 A1**
(43) Date of publication of application: **09.12.2026**
(21) Application number: 25382571.5
(22) Date of filing: 04.06.2025
(51) Int. Cl.: G09B 9/05

(54) **SELF-MANAGING DRIVING SIMULATOR AND METHOD OF OPERATION THEREOF**

(71) Applicant: Sapro Trading SL, 08787 Orpí (Barcelona) (ES)
(72) Inventor: Vilà Vaqués, Josep Maria, 08787 Orpí (ES)
(74) Representative: Elzaburu S.L.P.

(57) **Abstract**

Self-managing driving simulator comprising a structural chassis (5); a display screen (2), for displaying a visual simulation of a virtual driving scenario; a steering wheel (3) mounted on a wheelbase (12), for moving around the scenario; a microprocessor (1), configured for storing and loading at least one virtual driving scenario and for enabling the movement of a user through said scenario in response to the turns of the wheelbase (12) through the steering wheel (3). The driving simulator is characterized in that it comprises one presence sensor (4) configured to start the microprocessor (1) when the presence of a user is detected, and to perform a diagnosis of the driving simulator after the user has finished driving through the virtual driving scenario.

## Description

### Technical field

The present invention belongs to the technical field of driving simulation and is usable, for example and without being limitative, in driving training centers, driver education schools, car dealerships, as well as in gaming and arcade applications.

More particularly, this invention is related to a self-managing driving simulator which is able to operate autonomously, thus eliminating the need for supervision by specialized personnel.

The present invention also refers to a method of operation of a self-managing driving simulator.

### Background of the invention

Several different driving simulators are already known, and they are currently used in a variety of different applications. For example, and without being limitative, in professional driving training centers, in which they are usually used for virtual training sessions or competitions, in driver education schools, as well as in specialized gaming and arcade centers.

Even though some of the existing driving simulators are advanced in terms of hardware and software and consequently, are able to offer realistic driving experiences, the vast majority of them require specialized personnel for configuration, supervision, session management and maintenance. This not only increases operational costs but also limits their availability and scalability.

These disadvantages make many driving simulators, especially those at the higher end of the range, uneconomical to implement in commercial environments, for example, but without being limitative, in shopping centers.

On the other hand, the vast majority of said driving simulators, are not designed to withstand intensive use in commercial environments, resulting in accelerated wear and higher maintenance costs. They also lack integrated payment systems, advanced telemetry and/or the ability to interconnect multiple units for networked competitions.

Therefore, there is a need in industry to develop new driving simulators that are able to overcome at least some of the above-mentioned disadvantages and drawbacks.

### Summary of the invention

Thus, with the aim of providing a solution to the problems mentioned above, a first object of the present invention refers to a self-managing driving simulator comprising:
- a display screen, for displaying a visual simulation of a virtual driving scenario;
- a steering wheel mounted on a wheelbase, the steering wheel being arranged for moving around the driving scenario;
- a microprocessor, configured for storing and loading at least one virtual driving scenario, the microprocessor being also configured for enabling the movement of a user through said virtual driving scenario in response to the input received from the steering wheel; and
- a structural chassis, for housing the display screen, the steering wheel, and the microprocessor;

the driving simulator being characterized in that it also comprises at least one presence sensor, the presence sensor being configured to start the microprocessor when the presence sensor detects the presence of a user, and in that

the microprocessor is also configured to perform a self-diagnosis of the driving simulator and to turn off the driving simulator after the user has finished a driving simulation.

Thanks to the presence sensors, the driving simulators according to the present invention are capable of detecting the presence of a user and activate automatically without the need for human intervention. In addition, they can load a virtual driving scenario (which may have been selected by the user, for example, through a user interface) eliminating the need for manual configuration. In addition, the microprocessor is configured to perform a self-diagnosis after each use, designed to detect possible faults and introduce automatic adjustments in response to the results of said self-diagnosis, thus minimizing the need for technical maintenance.

A second object of the present invention refers to a method of operation of a self-managing driving simulator according to the first object of the invention, comprising the following steps:
- detect, using at least one presence sensor, the presence of a user in the driving simulator;
- start the microprocessor;
- loading at least one virtual driving scenario with the microprocessor;
- enabling the movement of the user through said virtual driving scenario in response to the inputs received from the steering wheel;
- perform a self-diagnosis of the driving simulator; and
- turn off the driving simulator when the presence sensor detects that the user gets up.

A third object of the present invention refers to a computer program, comprising program code to be executed by processing circuitry of a microprocessor, whereby execution of the program code causes the microprocessor to carry out a method of operation of self-managing driving simulator, according to the second object of the present invention.

A fourth object of the present invention refers to computer program product, comprising a non-transitory storage medium including program code to be executed by processing circuitry of a microprocessor, whereby execution of the program code causes the microprocessor to carry out a method of operation of self-managing driving simulator, according to the second object of the present invention.

### Brief description of the drawings

As a means for better understanding at least one embodiment of the present invention, the following set of drawings is introduced by way of schematic illustration and in a non-limitative manner.
Figure 1: is a schematic block diagram of a self-managing driving simulator according to a first embodiment of the present invention.
Figure 2: is a flow diagram, showing one possible embodiment of a method of operation of a self-managing driving simulator, according to the present invention.

### Detailed description of the invention

Throughout the description, the same alphanumeric references are used to designate the same or similar elements.

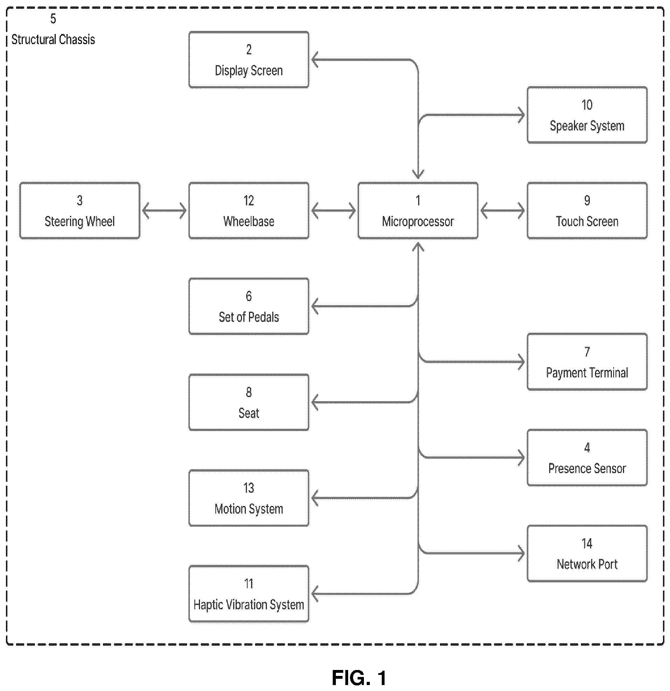

Figure 1 depicts the most important elements of a self-managing driving simulator according to a first embodiment of the present invention.

Thus, the self-managing driving simulator according to the present invention comprises a structural chassis 5, for housing the different elements which make up the driving simulator comprises, such as the display screen 2, the steering wheel 3, the set of pedals 6, the wheelbase 12 and the microprocessor 1.

In this particular case, structural chassis 5 is constructed from reinforced industrial aluminum, a material which ensures an increased durability and wear resistance, even in intensive use environments. Houses and protects internal components (such as microprocessor 1, display screen 2, the steering wheel 3, the set of pedals 6, speaker system 10, etc.) from impact and theft.

The self-managing driving simulator of the invention also comprises a display screen 2 in the case shown in Fig. 1, display screen 2 is a curved ultrawide screen having a 4K resolution. This resolution is preferred because it delivers sharp, realistic images. Furthermore, the use of a curved screen enhances immersive experience by surrounding the user's field of vision. Nevertheless, the preset invention contemplates the possibility of using display screens of other resolutions such as, for example, 2K or 1080.

Optionally, the driving simulator of the present invention comprises at least one user interface for allowing the user choose at least one virtual driving scenario and/or simulation parameters. Said user interface may be, as in the embodiment shown in Fig. 1, a touch screen 9 or alternatively and without being limitative, a tablet. The user interface preferably is a sperate element, different from the display screen 2. Nevertheless, the present invention also contemplates the possibility of the display screen 2 being a touch screen which also acts as a user interface.

Preferably, the user interface 9, may be further arranged for allowing users to enter their data, for managing payments and/or for choosing at least one virtual driving scenario.

The user interface 9 is preferably anchored to the structural chassis 5, to prevent theft and/or manipulation.

The self-managing driving simulator of the invention also comprises a steering wheel 3 mounted on the wheelbase 12, for moving around the driving scenario. The steering wheel 3 preferably comprises, as is the case in the example shown in Fig. 1, the following additional elements:
- RGB LED buttons, for the lighting customization and making it easier to identify controls; and/or
- paddle shifters: for simulating changes of the gears of the vehicle which is simulated as being driven;

On the other hand, the wheelbase 12 is preferably configured to transmit force feedback directly to the steering wheel 3, providing a realistic driving experience and also allowing an easy changing of the steering wheel 3.

Preferably, in one embodiment of the invention, as is the case in the driving simulator of Fig. 1, the driving simulator also comprises at least two pedals 6 (which in this particular case are, respectively, a throttle pedal and a brake pedal), for modifying the speed of movement around the driving scenario. In that case, the microprocessor 1 (which will be described in further detail below) is further configured for changing the speed movement of the user through the driving scenario, in response to the force exerted on the pedals 6. To that end, said pedals 6 preferably comprise at least one pressure load cell, which allows to accurately detect the force exerted by the user on the pedals 6. On the other hand, said pedals 6 preferably comprise at least one damper for simulating a sensation of resistance similar to a vehicle which is simulated as being driven.

Pedals 6 are preferably made of aluminum or an alloy thereof, a material which improves its durability and wear resistance.

At least one presence sensor 4, is also provided in the driving simulator according to the present invention. Said presence sensor 4 is configured to start the microprocessor 1 when the presence sensor 4 detects the presence of a user.

Consequently, the self-managing driving simulator of the invention also comprises a microprocessor 1. In this particular example, microprocessor 1 is a high-performance computer provided with latest generation processors, high-end graphics cards, and expandable random-access memory (RAM).

In the example shown in Fig1, microprocessor 1 is connected to the following elements of the driving simulator, as represented by the corresponding arrows:
- to display screen 2, through a display port;
- to wheelbase 12 and the pedals 6, through dedicated universal serial bus (USB) ports;
- to presence sensor(s) 4, through a dedicated USB port or, alternatively, through a sensor interface;
- to integrated payment terminal 7 (which will be described in further detail below), through a dedicated USB port;
- to touch screen 9 (which will be described in further detail below), through a dedicated USB port;
- to speaker system 10 (which will be described in further detail below),, through a dedicated USB port or, alternatively, through an output audio port;
- to motion system 13 (which will be described in further detail below), through a USB port or, alternatively, through a dedicated interface;

Moreover, microprocessor 1 is designed to run an integrated driving simulation software. The execution of said driving simulation software causes the microprocessor to carry out, among others, the following operations:
- storing and loading at least one virtual driving scenario. such scenario is preferably chosen by the user through the touch screen 9;
- enabling the movement of a user through said virtual driving scenario in response to the inputs from the steering wheel 3, the wheelbase 12 and the pedals 6; and
- performing a self-diagnosis of the driving simulator after the user has finished a driving simulation and to turn off the driving simulator.

Preferably, the microprocessor 1 is also configured to collect and analyze user performance data during the driving simulation. Such data may include, for example and without being limitative, route travel times within the driving scenario, driving speeds, and/or error occurrence. More preferably, collected data can be sent by email to an address previously introduced by the user.

Preferably, in one embodiment of the invention, as is the case of the embodiment shown in Fig. 1, the driving simulator also comprises an integrated payment terminal 7. More preferably, the integrated payment unit is a contactless payment unit, as is the case in the embodiment shown in Fig. 1.

These embodiments of the present invention, which are provided with integrated payment terminals 7, allow users to pay for driving simulation sessions themselves, without the need for staff to collect the corresponding payment. They also improve the user experience and facilitate the implementation of driving simulators in different environments.

Preferably, the driving simulator of the present invention comprises a seat 8 fixed to the structural chassis 5. In an even more preferred form, the system further comprises a haptic vibration system 11 integrated into the seat 8 or the structural chassis 5, the haptic vibration system 11 being configured to reproduce the vibrations of a vehicle which is simulated as being driven, as well as vibrations associated with the terrain of the virtual driving scenario on which the vehicle is moving.

The simulator according to the present invention can also be provided, as is the case in the example shown in Figure 1, with a motion system 13 anchored to the structural chassis 5. Motion system 13 comprises actuators which additionally simulate the vibrations that occur in the vehicle which is being driven.

In one embodiment of the invention, as is the case with embodiment shown in Fig. 1, the driving simulator is also equipped with a speaker system 10, the speaker system being configured to reproduce sounds of the engine of the vehicle, which is simulated as being driven, as well as vibrations associated with the terrain of the virtual driving scenario on which the vehicle is moving. Preferably, the speaker system 10 is a high-fidelity speaker system.

The driving simulator according to the present invention preferably includes a network port 14 configured for establishing a data connection with other driving simulators. Said network port may be, for example, and without limitation, an Ethernet port. The presence of a network port 14 element allows two or more driving simulators to operate in a network, facilitating multiplayer competitions as well as centralized data management.

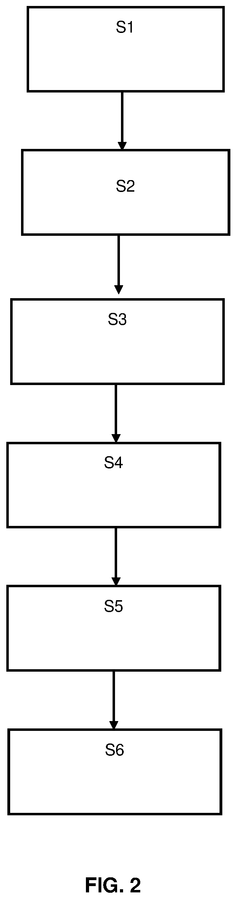

Figure 2: shows one possible embodiment of a method of operation of a self-managing driving simulator, according to the present invention.

This method starts with step S1, in which at least one presence sensor detects, the presence of a user in the driving simulator;

Then, in step S2, the presence sensor 4 starts the microprocessor 1;

Subsequently, in step S3, microprocessor 1 loads at least one virtual driving scenario with the microprocessor. In some embodiments of the invention the user chooses a particular driving scenario via the touch screen 9 in the example of Fig. 1.

Some embodiments of the present invention further comprise activating the integrated payment terminal 7 before loading the virtual driving scenario, for making that the user pay for a driving simulation and if present, activating the haptic vibration system 11 and/or the motion system 13.

Then, microprocessor 1 enables, in step S4, the movement of the user through said virtual driving scenario in response to the inputs from the steering wheel 3, wheelbase 12 and set of pedals 6. In those embodiments of the invention in which the simulator is also provided with two or more pedals 6, microprocessor 1 is further configured for changing the speed movement of the user through the driving scenario in response to the force exerted on the pedal.

Some embodiments of the present invention further comprise activating the microprocessor 1 to collect and analyze user performance data during the driving simulation. Such data may include, for example and without being limitative, lap times, average speeds, and best laps within the driving scenario, as well as user rankings, and/or full telemetry.

In step, S5, microprocessor 1 performs a self-diagnosis of the driving simulator after the user has finished a driving simulation and finally, in step S6, it turns off the driving simulator when the presence sensor 4 detects that the user gets up. In this particular embodiment of the invention, if the user doesn't get up and wants to repeat or try another experience, the method returns to step S1.

## Claims

1. Self-managing driving simulator comprising:
- a display screen (2), for displaying a visual simulation of a virtual driving scenario;
- a steering wheel (3) mounted on a wheelbase (12), the steering wheel (3) being arranged for moving around the driving scenario;
- a microprocessor (1), configured for storing and loading at least one virtual driving scenario, the microprocessor being also configured for enabling the movement of a user through said virtual driving scenario in response to input received from the steering wheel (3); and
- a structural chassis (5), for housing the display screen, the steering wheel, and the microprocessor;
the driving simulator being **characterized in that** it also comprises at least one presence sensor (4), the presence sensor (4) being configured to start the microprocessor (1) when the presence sensor (4) detects the presence of a user, and **in that**
the microprocessor (1) being also configured to perform a self-diagnosis of the driving simulator and to turn off the driving simulator after the user has finished a driving simulation.

2. Driving simulator according to claim 1, also comprising at least two pedals (6) for modifying the speed of movement around the driving scenario, and wherein the microprocessor (1) is further configured for changing the speed movement of the user through the driving scenario in response to the force exerted on the pedal.

3. Driving simulator according to any previous claims, further comprising at least one user interface (9) for allowing the user choose at least one virtual driving scenario and/or simulation parameters.

4. Driving simulator according to claim 3, wherein the user interface (9) is a touch screen or a tablet.

5. Driving simulator according to any previous claims, wherein the user interface (9), is further arranged for allowing users to enter their data, for managing payments and/or for choosing at least one virtual driving scenario.

6. Driving simulator according to any previous claims, further comprising an integrated payment terminal (7).

7. Driving simulator according to any previous claims, further comprising a seat (8) fixed to the structural chassis (5).

8. Driving simulator according to claim 7, further comprising a haptic vibration system (11) integrated into the seat(8) or the structural chassis (5), the haptic vibration system (11) being configured to reproduce the vibrations of a vehicle which is simulated as being driven, as well as vibrations associated with the terrain of the virtual driving scenario on which the vehicle is moving.

9. Driving simulator according to any previous claims, further comprising a speaker system (10), the speaker system (10) being configured to reproduce sounds of the engine of the vehicle which is simulated as being driven, as well as vibrations associated with the terrain of the virtual driving scenario on which the vehicle is moving.

10. Driving simulator according to any previous claims, wherein microprocessor (1) is also configured to collect and analyze user performance data during the driving simulation.

11. Driving simulator according to any previous claims, further comprising a network port (14) configured for establishing a data connection with other driving simulators.

12. Method of operation of a self-managing driving simulator according to any of claims 1 to 11, comprising the following steps:
- detecting (S1), using at least one presence sensor, the presence of a user in the driving simulator;
- starting (S2) the microprocessor (1);
- loading (S3) at least one virtual driving scenario with the microprocessor (1);
- enabling (S4) the movement of the user through said virtual driving scenario in response to the turns of the wheelbase (12) through the steering wheel (3); and
- perform (S5) a self-diagnosis of the driving simulator and turn off (S6) the driving simulator when the presence sensor (4) detects that the user gets up.

13. Method according to claim 12, further comprising a step of activating the integrated payment terminal (7) before loading the virtual driving scenario, for making the user pay for a driving simulation.

14. Computer program, comprising program code to be executed by processing circuitry of a microprocessor, whereby execution of the program code causes the microprocessor to carry out a method of operation of a self-managing driving simulator, according to any of claims 12 and 13.

15. computer program product, comprising a non-transitory storage medium including program code to be executed by processing circuitry of a microprocessor, whereby execution of the program code causes the microprocessor to carry out a method of operation of self-managing driving simulator, according to any of claims 12 and 13.
